# EUROPEAN PATENT APPLICATION

(11) **EP 4 779 156 A1**
(43) Date of publication of application: **22.07.2026**
(21) Application number: 25835166.7
(22) Date of filing: 11.02.2025
(51) Int. Cl.: F04D 25/08, F04D 29/60, F04D 29/66, F04D 29/00, E01H 1/08

(54) **BACKPACK BLOWER**

(30) Priority: 19.11.2024 CN 202411655302
(71) Applicant: Zhejiang Sunseeker Industrial Co., Ltd., Jinhua, Zhejiang 321000 (CN)
(72) Inventor: XIE, Zuojie, Jinhua, Zhejiang 321000 (CN); LIANG, Shengyao, Jinhua, Zhejiang 321000 (CN); GUO, Jiangjie, Jinhua, Zhejiang 321000 (CN); ZHU, Longhu, Jinhua, Zhejiang 321000 (CN); YANG, Chaoliang, Jinhua, Zhejiang 321000 (CN); LONG, Yanqing, Jinhua, Zhejiang 321000 (CN)
(74) Representative: Cleanthous, Marinos
(86) International application number: PCT/CN2025/076755
(87) International publication number: WO 2026/107985

(57) **Abstract**

A backpack blower is provided. A backpack frame of the backpack blower includes a support member, the support member includes a partition wall extending and protruding inward, and the partition wall partitions an inner side of the support member into a blower assembly mounting part and a battery mounting part: the blower assembly mounting part is adapted to mount and connect a blower assembly; the battery mounting part is adapted to mount and connect a battery pack; the blower assembly mounted and connected to the blower assembly mounting part is in contact with one side of the partition wall, and an exciting force generating vibration in an operation process of the blower assembly is at least partially transmitted from the partition wall to the backpack frame to avoid any part of the battery pack other than a connection part. According to the technical solution, the exciting force generating vibration in the operation process of the blower assembly is transmitted from the partition wall to the backpack frame to avoid any part of the battery pack, so that significant vibration generated by the blower assembly may be effectively prevented from being directly transmitted to the battery pack, a more stable mounting environment is provided to the battery pack, and an internal structure and an electronic component of the battery pack are protected from vibration damage.

## Description

### TECHNICAL FIELD

The present disclosure relates to a blower, and in particular, to a backpack blower.

### BACKGROUND

A power tool is more environmentally friendly than an engine tool, so as to be widely used. In order to be carried by a user conveniently, a backpack blower is often used. A user carries the backpack blower on his/her body and bears the weight of the backpack blower through the body, thereby reducing the force on hands and alleviate user fatigue.

However, the backpack blower generally needs to be equipped with a large-capacity battery pack and a large motor because of high power and long discharge time, so that the blower is significant in vibration, thereby being not conducive to the protection of the battery pack.

### SUMMARY

The present disclosure is intended to to provide a backpack blower capable of effectively reducing vibration of a battery pack.

In view of this, a backpack blower provided by the present disclosure includes:
a backpack frame;
a blower assembly, which is arranged in the backpack frame, where the blower assembly includes an air inlet cylinder and a duct assembly that are arranged along a transverse axis, and the duct assembly includes a duct, and a driving motor and a fan that are located in the duct; and
a battery pack, which is adapted to provide power to the driving motor, so that the driving motor drives the fan to rotate to generate airflow passing through a main air duct of the blower assembly; where
the backpack frame includes a support member, the support member includes a partition wall extending and protruding inward, and the partition wall partitions an inner side of the support member into a blower assembly mounting part and a battery mounting part:
the blower assembly mounting part is adapted to mount and connect the blower assembly;
the battery mounting part is adapted to mount and connect the battery pack; and
the blower assembly mounted and connected to the blower assembly mounting part is in contact with one side of the partition wall, and an exciting force generating vibration in an operation process of the blower assembly is at least partially transmitted from the partition wall to the backpack frame to avoid any part of the battery pack other than a connection part.

Further, an air inlet end of the blower assembly is abutted against one end of the partition wall by the air inlet cylinder.

Further, the air inlet cylinder is a sponge material body.

Further, an air outlet end of the blower assembly is fixedly connected to the other end of the partition wall by a lock hoop.

Further, one side of the lock hoop is provided with an extension part in a direction of the transverse axis, and a first vibration-proof member is arranged between the extension part and the duct.

Further, the partition wall is integrally formed with the support member, and a side that is of the partition wall and that faces the blower assembly mounting part is arc-shaped to form a part of the blower assembly mounting part.

Further, the battery mounting part includes a battery accommodating cavity and a latch connection part; and
when the battery pack is mounted and connected to the battery mounting part, the battery pack is fixedly connected to a latch of the latch connection part, suspended in the battery accommodating cavity, and spaced from any wall surface of non-latch connection surfaces of the battery accommodating cavity.

Further, any wall surface of the non-latching connection surfaces of the battery accommodating cavity is formed by the backpack frame.

Further, the backpack blower includes: a battery mounting base connected to the partition wall, where one side that is of the battery mounting base and that is adapted to connect and mount the battery pack extends and protrudes outward to form the latch connection part, and the latch connection part is correspondingly provided with an electrical connection terminal; and
the battery pack mounted and connected in the battery mounting part is connected to the latch connection part to dock the electrical connection terminal with a discharge port of the battery pack, and is spaced from the partition wall.

Further, the partition wall is provided with a positioning groove adapted to fit with a shape and a size of the bottom of the battery mounting base, and the battery mounting base is positioned and mounted in the positioning groove, and is fixedly connected to the partition wall through a connector that penetrates through a lug extending and protruding at the bottom of the battery mounting base.

Further, the battery mounting base is provided with an upper bottom surface opposite to the bottom of the battery pack to support and abut against the battery pack; and
the upper bottom surface protrudes from the partition wall and has a height difference from the partition wall.

Further, the upper bottom surface is provided with an elastic boosting member adapted to abut against the battery pack, and an elastic force of the elastic boosting member continuously acts on the battery pack after the battery pack is mounted in place.

Further, the elastic boosting member includes:
a boosting arm, which is hinged with the battery mounting base through a pin shaft and is adapted to rotate along the pin shaft, where the boosting arm includes a connection end and a boosting lifting end; and
a boosting spring, one end of which is connected to the battery mounting base, and the other end of which is connected to the connection end; where
the boosting lifting end is adapted to protrude from the upper bottom surface under an elastic force of the boosting spring acting on the connection end.

Further, the battery mounting base is further provided with a latch assembly;
the latch assembly includes a locking part and an unlocking part which are symmetrically distributed;
the locking part is adapted to lock the battery pack correspondingly connected to the locking part;
the unlocking part is adapted to unlock the battery pack in a locked state, the unlocking part includes a first unlocking part and a second unlocking part, and each unlocking part is adapted to be operated independently to unlock a corresponding first battery pack and a corresponding second battery pack separately, and/or
the first unlocking part and the second unlocking part are simultaneously located in a touchable area of a single human hand, and a touching action of a human palm is capable of simultaneously touching the first unlocking part and the second unlocking part, so that locked states of the first battery pack and the second battery pack are synchronously unlocked.

Compared with the prior art, the present disclosure has the following beneficial technical effect.

Due to flow of a fan, a motor and high-speed airflow, the blower assembly vibrates at this position in the operation process. In the present disclosure, an exciting force generating vibration in an operation process of the blower assembly is at least partially transmitted from the partition wall to the backpack frame to avoid any part of the battery pack other than a connection part, so that significant vibration generated by the blower assembly may be effectively prevented from being directly transmitted to the battery pack, a more stable mounting environment is provided to the battery pack, and an internal structure and an electronic component of the battery pack are protected from vibration damage.

### BRIEF DESCRIPTION OF THE DRAWINGS

In order to explain the specific embodiment of the present disclosure or the technical solution in the prior art more clearly, the drawings needed in the description of the specific embodiment or the prior art will be briefly introduced below. Obviously, the drawings in the following description are some embodiments of the present disclosure. Other drawings can be obtained according to these drawings without paying creative labor for those skilled in the art.
FIG. 1 is a diagram of a structure according to a specific embodiment of the present disclosure;
FIG. 2 is exploded diagram of a structure according to a specific embodiment of the present disclosure;
FIG. 3a is an exploded view of an internal structure of a backpack frame according to an embodiment of the present disclosure;
FIG. 3b is a diagram of a mounting structure of a blower assembly according to a specific embodiment of the present disclosure;
FIG. 4 is a diagram of a mounting and connecting structure of a battery mounting base according to a specific embodiment of the present disclosure;
FIG. 5a is a top view of a structure of a backpack frame according to a specific embodiment of the present disclosure;
FIG. 5b is a top view of a structure of a battery accommodating cavity according to an embodiment of the present disclosure;
FIG. 6 is a perspective view of a structure in which an upper bottom surface protrudes from a partition wall according to an embodiment of the present disclosure;
FIG. 7 is a front view of a structure in which an upper bottom surface protrudes from a partition wall according to an embodiment of the present disclosure;
FIG. 8 is a diagram of a structure of an elastic boosting member according to a specific embodiment of the present disclosure; and
FIG. 9 is a diagram of a structure of a battery pack according to a specific embodiment of the present disclosure.

### DETAILED DESCRIPTION OF THE EMBODIMENTS

The technical solution of the present disclosure will be described clearly and completely with reference to the drawings. Obviously, the described embodiments are some embodiments of the present disclosure, rather than all of the embodiments. Based on the embodiments in the present disclosure, all other embodiments obtained by those skilled in the art without paying creative labor belong to the scope of protection of the present disclosure.

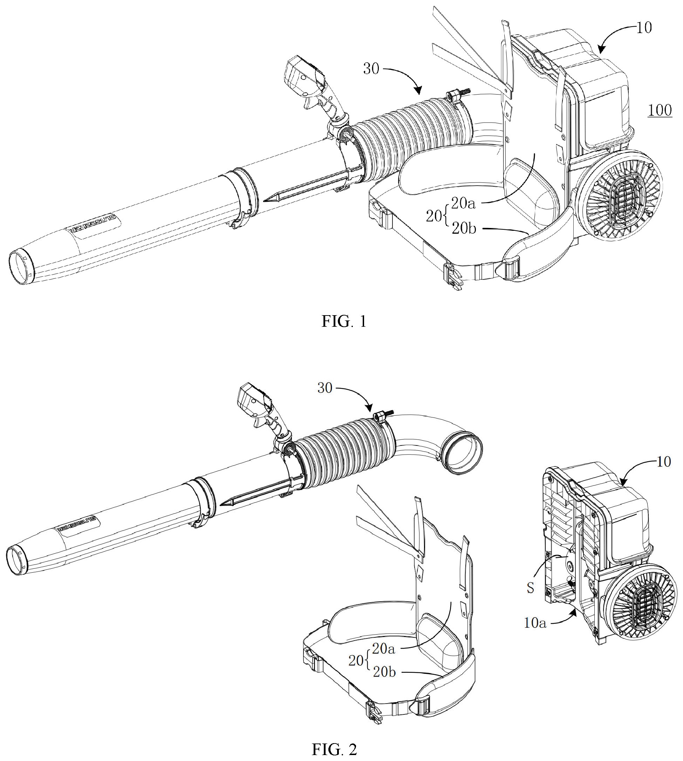

Referring to FIG. 1, FIG. 2, and FIG. 3a, a backpack blower 100 according to the present disclosure includes a backpack frame 10, a blower assembly 40 and a battery pack 50 that are arranged in the backpack frame 10, and a strap assembly 20 and an air outlet pipe assembly 30 that are connected to the backpack frame 10.

The backpack frame 10 includes a support member 10a close to a backpack side of a person, a cover member 10b connected to the support member 10a, and a cover 10c movably hinged (e.g., pivotally connected) with the cover member 10b.

The cover member 10b corresponds to the blower assembly mounting part 11 of the support member 10a. The cover 10c corresponds to the battery mounting part 12 of the support member 10a. In an assembly operation, the assembled blower assembly 40 is first positioned and connected to the blower assembly mounting part 11. Then, the cover member 10b is correspondingly fastened to the support member 10a to cover the blower assembly 40. The cover 10c can rotate along the movable hinge joint with the cover member 10b to close or open the battery mounting part 12. When the battery pack 50 is mounted and connected to the battery mounting part 12, the cover 10c is closed to cover the battery pack 50 and is spaced from the upper part of the battery pack 50, that is, a U side.

With continued reference to FIG. 2, a back surface S of the support member 10a is adapted to connect the strap assembly 20. The strap assembly 20 includes a connection part 20a and a strap 20b. The connection part 20a is connected to the back surface S of the support member 10a.

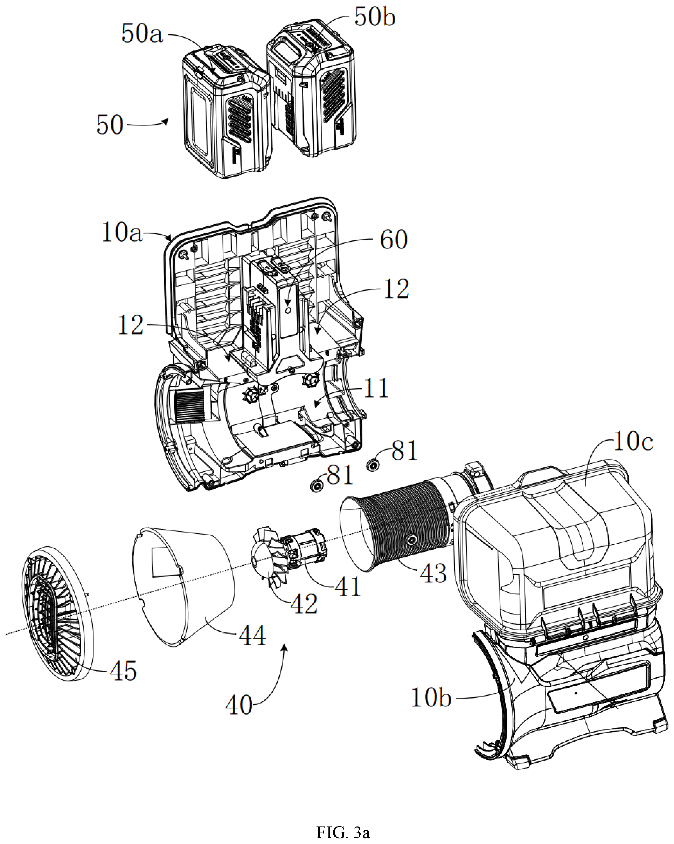

With continued reference to FIG. 3a, the blower assembly 40 includes a driving motor 41 and a fan 42 that are arranged along a transverse axis. The driving motor 41 and the fan 42 are connected integrally, and are fixedly arranged in the duct 43 in combination with a flow guide cone to form a duct assembly. The air inlet side of the fan 42 is provided with an air inlet cylinder 44 and an air inlet cover 45 in sequence, which are assembled and connected to the duct assembly to form a blower assembly 40.

A plurality of battery packs 50, such as a first battery pack 50a and a second battery pack 50b, are adapted to provide power to the driving motor 41, so that the driving motor 41 drives the fan 42 to rotate to generate airflow passing through a main air duct of the blower assembly 40.

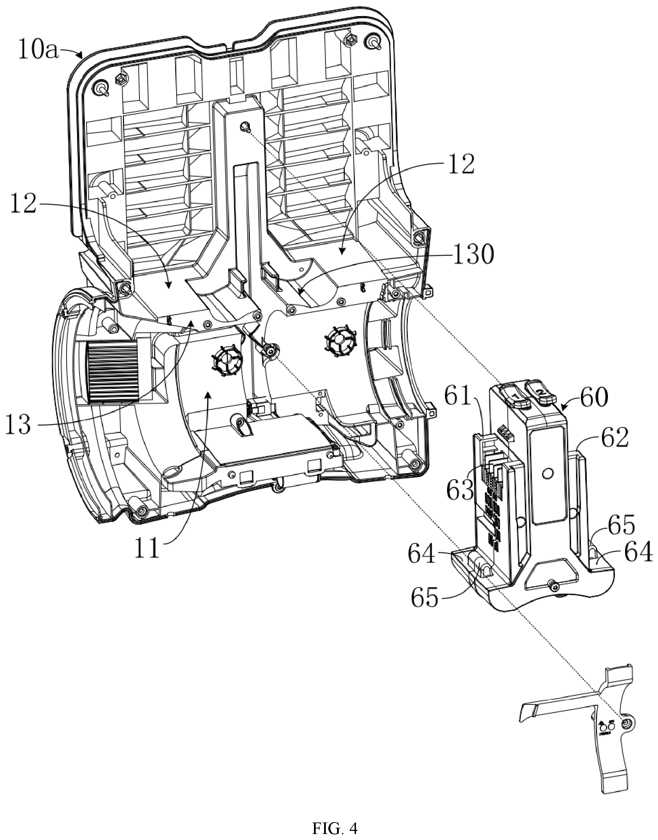

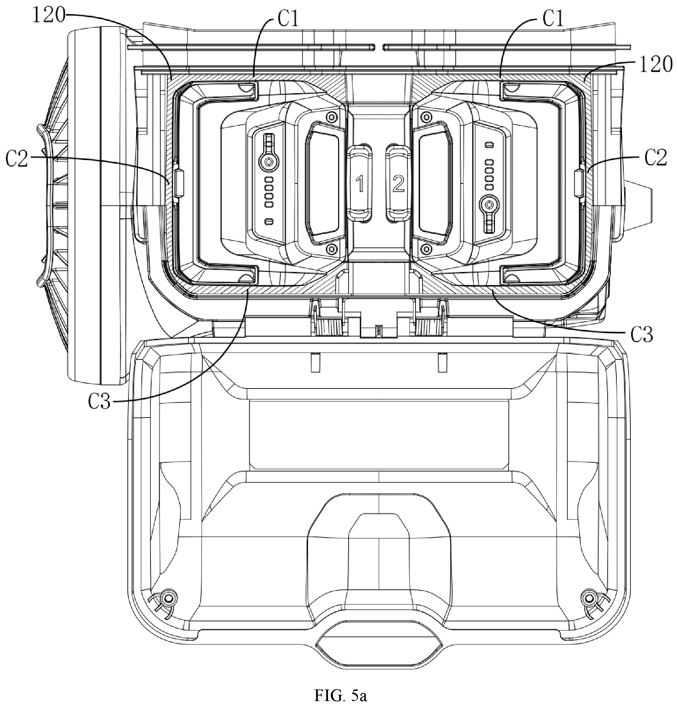

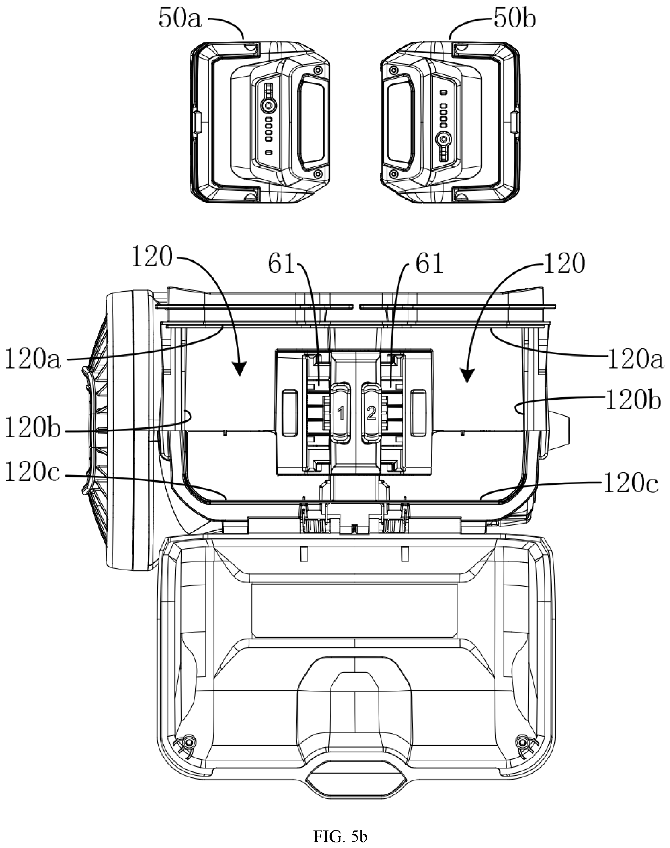

With reference to FIG. 4, FIG. 5a, and FIG. 5b, the support member 10a includes a partition wall 13 extending and protruding inward, and the partition wall 13 partitions an inner side of the support member 10a into a blower assembly mounting part 11 and a battery mounting part 12.

The blower assembly mounting part 11 is adapted to mount and connect the blower assembly 40.

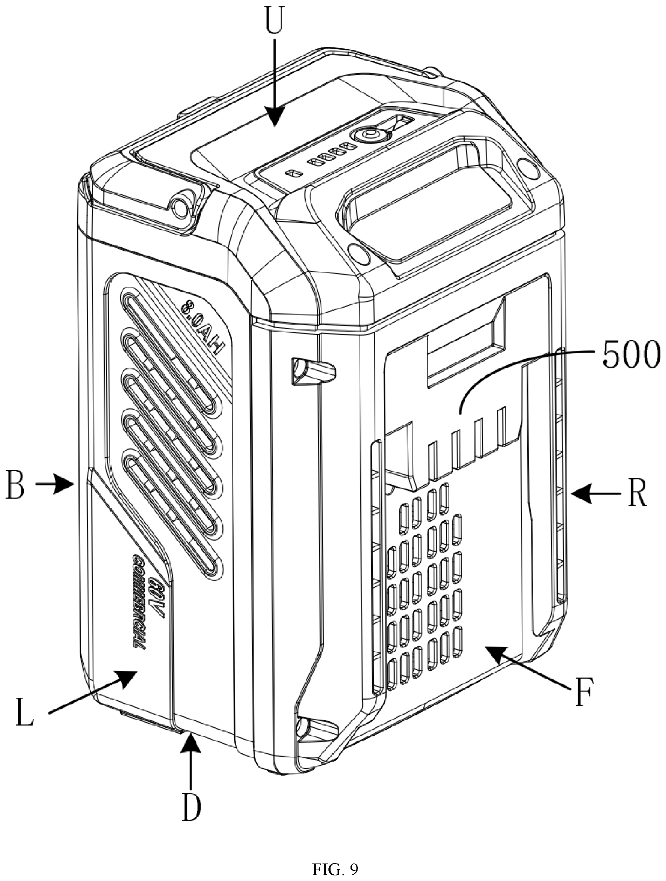

The battery mounting part 12 is adapted to mount and connect the battery pack 50. Specifically, as shown in FIG. 9, the battery pack 50 has six viewing surfaces: front (F), back (B), left (L), right (R), up (U), and down (D). The front (F) viewing surface is provided with a connection part 500 docked with the battery mounting part 12. The battery pack 50 is connected to the blower assembly mounting part 11 through the connection part 500, and in particular, forms an unlockable latch connection together with the blower assembly mounting part 11 through the connection part 500 to facilitate free assembly and disassembly.

The blower assembly 40 mounted and connected to the blower assembly mounting part 11 is in contact with one side of the partition wall 13, and an exciting force generating vibration in an operation process of the blower assembly 40 is at least partially transmitted from the partition wall 13 to the backpack frame 10 to avoid any part of the battery pack 50 other than a connection part.

Those skilled in the art can know that when the blower assembly 40 operates, the driving motor 41 in the blower assembly drives the fan 42 to rotate to generate airflow. The blower assembly 40 may inevitably generate vibration in this process, thereby forming an exciting force.

In the technical solution, the transmission path of the exciting force is as follows.

At least a part of the exciting force may be transmitted to the partition wall 13 through a contact point between the blower assembly 40 and the partition wall 13, and then transmitted to the whole backpack frame 10 along the partition wall 13. In this process, most of the exciting force may be dispersed in the backpack frame 10, and only a very small part of the exciting force may be transmitted to the battery pack 50 through the connection part between the battery mounting part 12 and the battery pack 50 with relatively little influence, thereby avoiding a direct effect of the exciting force on the battery pack 50.

On the one hand, significant vibration generated by the blower assembly 40 may be effectively prevented from being directly transmitted to the battery pack 50, a more stable mounting environment is provided to the battery pack 50, and an internal structure and an electronic component of the battery pack 50 are protected from vibration damage. On the other hand, the vibration of the blower assembly 40 often generates noise, and the exciting force is transmitted from the partition wall 13 to the backpack frame 10 to reduce the vibration transmitted to the battery pack 50 and other components, thereby reducing a noise level of the whole device.

In addition, it is worth mentioning that the design in which the exciting force is transmitted from the partition wall 13 to the backpack frame 10 to avoid the battery pack 50 causes the stress to be dispersed through the partition wall 13 and the backpack frame 10 in a falling process. In this way, the local stress borne by the battery pack 50 may be reduced, and the occurrence of cracking of the housing of the battery pack 50 and damage to internal components can be reduced.

In addition, as a part of the support member 10a, the partition wall 13 enhances the overall structural intensity of the backpack frame 10 to some extent. When the device falls, a stronger frame may better protect the battery pack 50 and the blower assembly 40 therein. The partition wall 13 and the backpack frame 10 jointly bear the impact force of falling, thereby reducing the pressure on the battery pack 50.

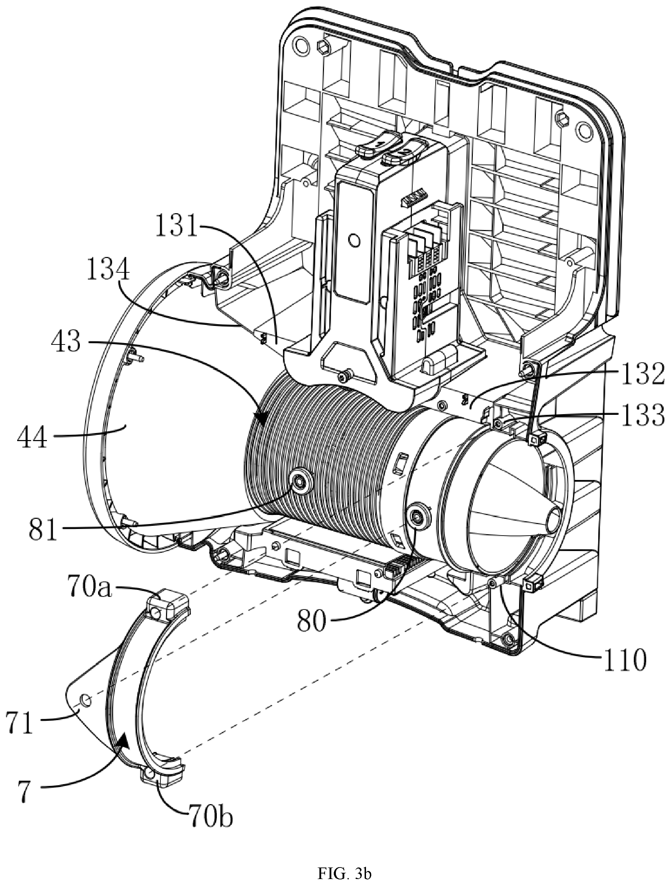

Further, with reference to FIG. 3b, an air inlet end of the blower assembly 40 is abutted against one end 131 of the partition wall 13 by the air inlet cylinder 44, as shown by the contact surface 134. On the one hand, a positioning and support point is provided to the blower assembly 40, thereby avoiding existence of an air inlet gap, and helping reduce airflow disturbance in the air inlet process. On the other hand, the exciting force of vibration generated by the blower assembly 40 during the operation may be transmitted to the partition wall 13 more effectively through the position in which the air inlet cylinder 44 is abutted with the partition wall 13.

Further, the air inlet cylinder 44 is a sponge material body. The sponge material has good sound absorption performance. When air flows through the air inlet cylinder, the noise generated by the airflow may be absorbed by a porous structure of the sponge, thereby reducing noise generated when the blower operates. In addition, the soft texture of the sponge may play a buffering role to some extent, which may prevent rigid collision from directly damaging the whole device.

Further, as shown in FIG. 3b, an air outlet end of the blower assembly 40 is fixedly connected to the other end 132 of the partition wall 13 by a lock hoop 7, thereby positioning and fixing the blower assembly 40 from both ends, and allowing the blower assembly to be mounted in the backpack frame 10 more stably. At the same time, similar to the air inlet end, the connection of the air outlet also participates in the transmission path of the exciting force in which the blower assembly 40 vibrates. The vibration generated during operation may be transmitted to the partition wall 13 through the lock hoop 7, and then further dispersed to the backpack frame 10.

Specifically, one end 70a of the lock hoop 7 is connected and fixed to a positioning connecting post 133 on the other end 132 of the partition wall 13 by a connector such as a screw and a bolt, and the other end 70b of the lock hoop is connected and fixed to a positioning connecting post 110 on the frame by a connector such as a screw and a bolt.

Further, one side of the lock hoop 7 is provided with an extension part 71 in a direction of the transverse axis, and a first vibration-proof member 80 is arranged between the extension part 71 and the duct 43. The first vibration-proof member 80 can effectively isolate and absorb a part of the vibration and reduce the vibration.

In addition, a second vibration-proof member 81 is provided between the duct 43 and the frame at the blower assembly mounting part 11. When the blower assembly 40 operates, a part of the vibration generated by the operation of the driving motor 41 and the fan 42 may be transmitted through the duct 43. The second vibration-proof member 81 can effectively isolate and absorb the vibration and prevent the vibration from being directly transmitted to the frame at the blower assembly mounting part 11. This can reduce shaking and deformation of the frame caused by vibration and maintain the stability of the frame structure. In addition, after the vibration transmitted by the duct is attenuated by the second vibration-proof member 81, the noise radiated by the frame may also be reduced accordingly.

Further, with continued reference to FIG. 4, the partition wall 13 is integrally formed with the support member 10a, and a side that is of the partition wall and that faces the blower assembly mounting part 11 is arc-shaped to form a part of the blower assembly mounting part 11.

The partition wall 13 is integrally formed with the support member 10a, which allows the whole structure to be more stable. During the use of the backpack blower, especially when the backpack blower is subjected to vibration, impact or falling, the integrally formed structure can better bear an external force, reducing the risk of loosening and separation between the partition wall and the support member. At the same time, the side that is of the partition wall 13 and that faces the blower assembly mounting part 11 is arc-shaped. The arc-shaped structure can better bear the force transmitted by the blower assembly, and the arc-shaped surface can evenly disperse the force to the surrounding support member, thereby reducing local stress concentration and reducing the possibility of damage to the partition wall due to the uneven force.

Specifically, with continued reference to FIG. 4 and with reference to FIG. 5a, FIG. 5b, and FIG. 9, the battery mounting part 12 includes a battery accommodating cavity 120 and a latch connection part 61.

When the battery pack 50 is mounted and connected to the battery mounting part 12, the connection part 500 arranged on the front (F) view surface of the battery pack 50 is fixedly connected to a latch of the latch connection part 61, suspended in the battery accommodating cavity 120, and spaced from any wall surface of non-latch connection surfaces 120a, 120b, and 120c of the battery accommodating cavity 120.

Specifically, with reference to FIG. 5a, when the battery pack 50 is mounted and connected to the battery mounting part 12 when viewed from the top view of the blower, on an outer periphery of the battery pack 50, such as a first battery pack 50a and a second battery pack 50b, except the latch connection side, that is, the F side shown in FIG. 9, the remaining sides (the B side, the L side, and the R side) separately keep gaps with the inner wall surface of the battery accommodating cavity 120, as shown by gaps C1, C2, and C3. That is, the battery pack 50 is suspended in the battery accommodating cavity 120 at this time, and spaced from any wall surface of non-latch connection surfaces 120a, 120b, and 120c of the battery accommodating cavity 120.

The battery pack is suspended in the battery accommodating cavity and spaced from the wall surface of the non-latching connection surfaces 120a, 120b, and 120c, which may minimize the transmission of external vibration to the battery pack. When the blower operates, the vibration generated by the blower assembly and other vibration that the device may be subjected to during use may not be directly transmitted to the battery pack, thereby protecting electronic components and chemical structures inside the battery, and prolonging the service life of the battery.

In addition, the gap provides a space for air to flow around the battery pack. In an operation process of the device, the battery pack may generate heat, and air may circulate through these gaps to take away the heat, thereby improving the heat dissipation effect of the battery pack, preventing the battery from overheating, and ensuring the performance and safety of the battery.

Further, any wall surface of the non-latching connection surfaces 120a, 120b, and 120c of the battery accommodating cavity 120 is formed by the backpack frame 10. The backpack frame 10 is used to form the wall surface, so that the battery accommodating cavity 120 is more integrated with the structure of the whole backpack blower, thereby making full use of the space of the backpack frame 10 without an additional independent wall structure of the battery accommodating cavity, and allowing the overall structure of the device to be more compact.

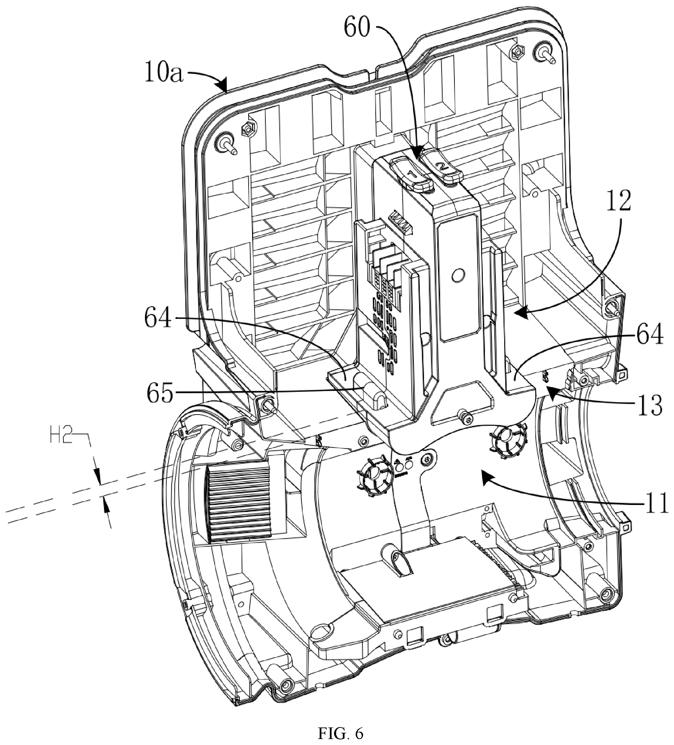

Further, with continued reference to FIG. 4 and FIG. 6, the battery mounting base 60 is connected to the partition wall 13, one side that is of the battery mounting base 60 and that is adapted to connect and mount the battery pack 50 extends and protrudes outward to form the latch connection part 61, and the latch connection part 61 is correspondingly provided with an electrical connection terminal 63.

The battery pack 50 mounted and connected in the battery mounting part 12 is connected to the latch connection part 61 to dock the electrical connection terminal 63 with a discharge port of the battery pack 50, and is spaced from the partition wall 13. At this time, the D side of the battery pack 50 is spaced from the partition wall 13.

The partition wall 13 provides support and positioning to the battery mounting base 60, so that the battery mounting part 12 is more firm and can bear the weight of the battery pack 50 and the vibration generated during use, thereby reducing the risk that components are loosened and are damaged.

The battery pack 50 is spaced from the partition wall 13. Specifically, the D side of the battery pack 50 is spaced from the partition wall 13, which avoids direct contact between the battery pack 50 and the partition wall 13. A lower part of the partition wall 13 forms a part of the blower assembly mounting part 11 and is in direct contact with the blower assembly 40. In the operation process, the blower assembly 40 vibrates significantly at this position due to flow of a fan, a motor and high-speed airflow. At this time, the battery pack 50 is spaced from the partition wall 13, which may effectively prevent the significant vibration generated by the blower assembly 40 from being directly transmitted to the battery pack 50.

In addition, when the whole device falls, the battery pack 50 is spaced from the partition wall 13, which provides some buffer space to the battery pack 50 when the device falls. When the device is hit, the partition wall 13 may not directly transmit the impact force to the battery pack 50, but partially absorb and disperse the impact force through air or other media in the spacing, thereby reducing the direct impact intensity on the battery pack. In addition, the spacing may reduce the contact stress between the battery pack and the partition wall at the moment of falling. If there is no spacing, the battery pack and the partition wall may generate a large contact force instantaneously when falling, which may easily lead to problems such as cracking of the housing of the battery pack and damage to internal components. Through the spaced arrangement, the instantaneous stress is reduced, and the damage resistance of the battery pack in the case of falling is improved.

Further, the partition wall 13 is provided with a positioning groove 130 adapted to fit with a shape and a size of the bottom of the battery mounting base 60. The battery mounting base 60 is positioned and mounted in the positioning groove 130, and is fixedly connected to the partition wall 13 through a connector that penetrates through a lug 67 extending and protruding at the bottom of the battery mounting base, for example, a bolt. At this time, as a part of the support member 10a, the partition wall 13 is fixedly connected to the battery mounting base 60, which can better bear various external forces on the device during use.

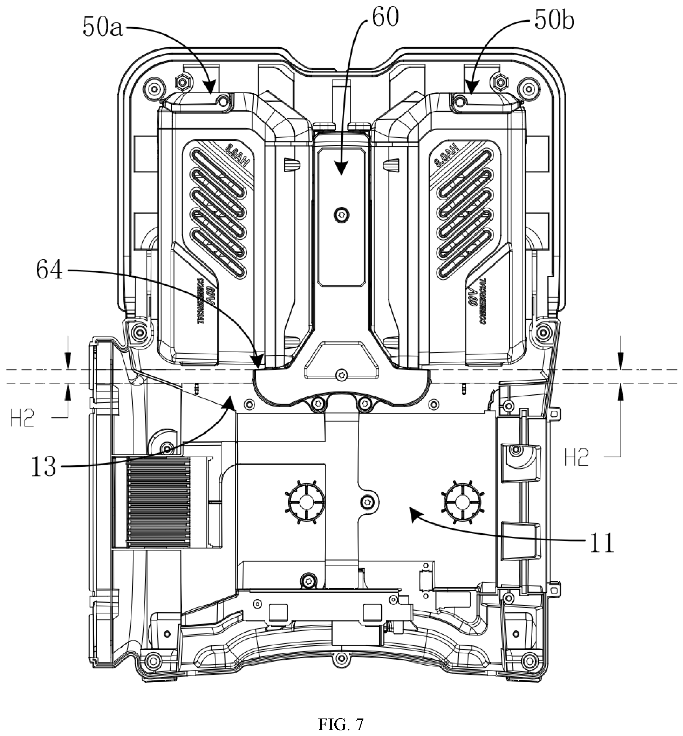

Further, with reference FIG. 6 and FIG. 7, the battery mounting base 60 is provided with an upper bottom surface 64 opposite to the bottom of the battery pack 50 to support and abut against the battery pack 50.

The upper bottom surface 64 protrudes from the partition wall 13 and has a height difference H2 from the partition wall 13.

The upper bottom surface protrudes from the partition wall and has a height difference H2 with the partition wall, so that the battery pack 50 can be spaced from the partition wall 13.

Further, the upper bottom surface 64 is provided with an elastic boosting member 65 adapted to abut against the battery pack 50. An elastic force of the elastic boosting member 65 continuously acts on the battery pack 50 after the battery pack 50 is mounted in place.

On the one hand, when the battery pack 50 needs to be disassembled, the elastic boosting member 65 abuts against the battery pack 50, which can provide an upward elastic force. The elastic force may help a user easily remove the battery pack 50 from the battery mounting base 60, thereby greatly reducing the difficulty and effort required for disassembly.

On the other hand, on the basis that the battery pack 50 is spaced from the partition wall 13 to avoid direct contact between the battery pack 50 and the partition wall 13, when the battery pack 50 is mounted and connected, the battery pack is only in contact with the elastic boosting member 65 with an elastic design, further minimizing direct contact with other components that may transmit vibration. The elastic boosting member 65 can absorb and buffer vibration from all directions more effectively, provide a more stable mounting environment to the battery pack 50, and protect an internal structure and an electronic component of the battery pack 50 from vibration damage.

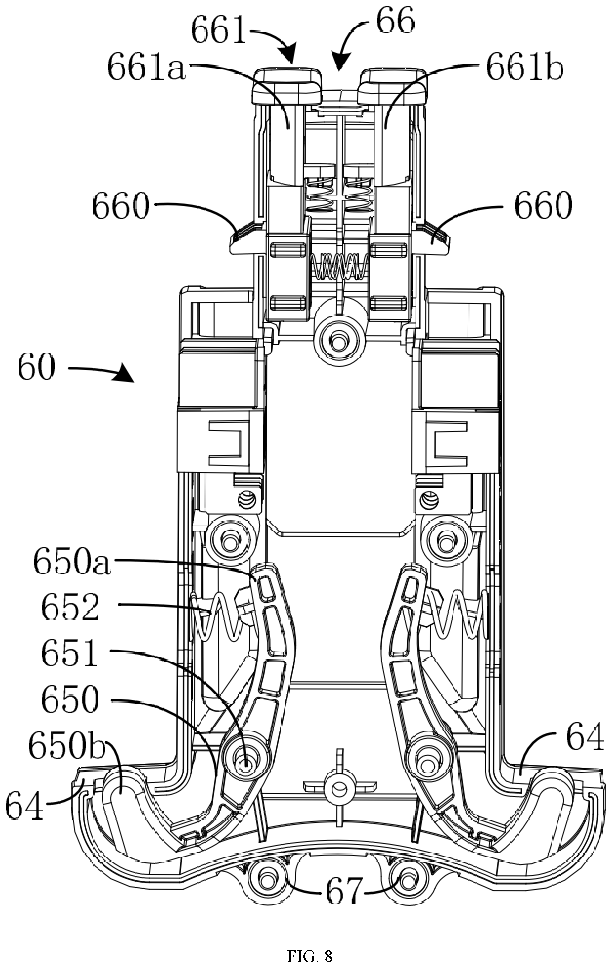

Further, with reference FIG. 8, the elastic boosting member 65 includes:
a boosting arm 650, which is hinged with the battery mounting base 60 through a pin shaft 651 and is adapted to rotate along the pin shaft 651, where the boosting arm 650 includes a connection end 650a and a boosting lifting end 650b; and
a boosting spring 652, one end of which is connected to the battery mounting base 60, and the other end of which is connected to the connection end 650a; where
the boosting lifting end 650b is adapted to protrude from the upper bottom surface 64 under an elastic force of the boosting spring 652 acting on the connection end 650a.

The boosting lifting end 650b protrudes from the upper bottom surface 64 under the action of the boosting spring 652. When the battery pack is mounted, the battery pack may compress the boosting lifting end 650b, so that the boosting arm 650 rotates around the pin shaft, and the boosting spring 652 is compressed at the same time. When the battery pack needs to be disassembled, an elastic restoring force of the boosting spring 652 may be transmitted to the boosting lifting end 650b through the connection end 650a. The battery pack 50 is lifted upward, thereby facilitating quick disassembly of the battery pack by a user, and improving the convenience of operation.

After the battery pack 50 is mounted in place, the elastic force of the boosting spring 652 continues to act on the battery pack 50 through the boosting lifting end 650b. At this time, the boosting spring 652 not only can provide a lifting force and a supporting force, but also play a role in buffering and shock absorption. In an operation process of the device, the boosting spring may absorb and buffer the vibration and impact from the outside, reduce the influence on the battery pack, and protect the internal structure and the electronic component of the battery pack.

Further, the battery mounting base is further provided with a latch assembly 66;
the latch assembly 66 includes a locking part 660 and an unlocking part 661 which are symmetrically distributed;
the locking part 660 is adapted to lock the battery pack 50 correspondingly connected to the locking part;
the unlocking part 661 is adapted to unlock the battery pack 50 in a locked state, the unlocking part 661 includes a first unlocking part 661a and a second unlocking part 661b, and each unlocking part is adapted to be operated independently to unlock a corresponding battery pack 50 separately, that is, a first battery pack 50a and a second battery pack 50b, and/or
the first unlocking part 661a and the second unlocking part 661b are simultaneously located in a touchable area of a single human hand, and a touching action of a human palm is capable of simultaneously touching the first unlocking part 661a and the second unlocking part 661b, so that locked states of the first battery pack 50a and the second battery pack 50b are synchronously unlocked.

In this way, a flexible and convenient unlocking function is provided.

Unlocking by independent operation: Each unlocking part may be operated independently to unlock the corresponding battery pack separately, which provides a user with greater flexibility. For example, in some cases, a user may only need to replace a battery pack without unlocking two battery packs at the same time. The independent unlocking function facilitates the operation of a user, and improves the convenience of use.

Synchronous unlocking function: When the first unlocking part and the second unlocking part are simultaneously located in the touchable area of a single human hand, a touching action of a human palm is capable of simultaneously touching two unlocking parts, so that locked states of the two battery packs are synchronously unlocked. This is very convenient when two battery packs need to be replaced at the same time or other operations are carried out, thereby saving time and operation steps.

In addition, the design takes into account the actual operation needs of a user, so that the unlocking operation can be completed by a single hand. This is very convenient in practical application, especially when a user needs to replace the battery pack in a narrow space or other circumstances where it is inconvenient for both hands to operate. The unlocking function of operation by a single hand can improve user experience.

Finally, it should be noted that the above embodiments are only used to illustrate the technical solution of the present disclosure, rather than limit the technical solution. Although the present disclosure has been described in detail with reference to the foregoing embodiments, it should be understood by those skilled in the art that the technical solution described in the foregoing embodiments can still be modified, or some or all of its technical features can be replaced by equivalents. However, these modifications or replacements do not make the essence of the corresponding technical solution deviate from the scope of the technical solution of the embodiment of the present disclosure.

## Claims

1. A backpack blower, comprising:
a backpack frame;
a blower assembly, which is arranged in the backpack frame, wherein the blower assembly comprises an air inlet cylinder and a duct assembly that are arranged along a transverse axis, and the duct assembly comprises a duct, and a driving motor and a fan that are located in the duct; and
a battery pack, which is adapted to provide power to the driving motor, so that the driving motor drives the fan to rotate to generate airflow passing through a main air duct of the blower assembly; wherein
the backpack frame comprises a support member, the support member includes a partition wall extending and protruding inward, and the partition wall partitions an inner side of the support member into a blower assembly mounting part and a battery mounting part:
the blower assembly mounting part is adapted to mount and connect the blower assembly;
the battery mounting part is adapted to mount and connect the battery pack;
the battery mounting part comprises a battery accommodating cavity and a latch connection part;
when the battery pack is mounted and connected to the battery mounting part, the battery pack is fixedly connected to a latch of the latch connection part, suspended in the battery accommodating cavity, and spaced from any wall surface of non-latch connection surfaces of the battery accommodating cavity; and
the blower assembly mounted and connected to the blower assembly mounting part is in contact with one side of the partition wall, and an exciting force generating vibration in an operation process of the blower assembly is at least partially transmitted from the partition wall to the backpack frame to avoid any part of the battery pack other than a connection part.

2. The backpack blower according to claim 1, wherein an air inlet end of the blower assembly is abutted against one end of the partition wall by the air inlet cylinder.

3. The backpack blower according to claim 2, wherein the air inlet cylinder is a sponge material body.

4. The backpack blower according to any one of claims 1 to 3, wherein an air outlet end of the blower assembly is fixedly connected to the other end of the partition wall by a lock hoop.

5. The backpack blower according to claim 4, wherein one side of the lock hoop is provided with an extension part in a direction of the transverse axis, and a first vibration-proof member is arranged between the extension part and the duct.

6. The backpack blower according to claim 1, wherein the partition wall is integrally formed with the support member, and a side that is of the partition wall and that faces the blower assembly mounting part is arc-shaped to form a part of the blower assembly mounting part.

7. The backpack blower according to claim 1, wherein any wall surface of the non-latching connection surfaces of the battery accommodating cavity is formed by the backpack frame.

8. The backpack blower according to claim 1 or 7, comprising: a battery mounting base connected to the partition wall, wherein one side that is of the battery mounting base and that is adapted to connect and mount the battery pack extends and protrudes outward to form the latch connection part, and the latch connection part is correspondingly provided with an electrical connection terminal; and
the battery pack mounted and connected in the battery mounting part is connected to the latch connection part to dock the electrical connection terminal with a discharge port of the battery pack, and is spaced from the partition wall.

9. The backpack blower according to claim 8, wherein the partition wall is provided with a positioning groove adapted to fit with a shape and a size of the bottom of the battery mounting base, and the battery mounting base is positioned and mounted in the positioning groove, and is fixedly connected to the partition wall through a connector that penetrates through a lug extending and protruding at the bottom of the battery mounting base.

10. The backpack blower according to claim 8, wherein the battery mounting base is provided with an upper bottom surface opposite to the bottom of the battery pack to support and abut against the battery pack; and
the upper bottom surface protrudes from the partition wall and has a height difference from the partition wall.

11. The backpack blower according to claim 10, wherein the upper bottom surface is provided with an elastic boosting member adapted to abut against the battery pack, and an elastic force of the elastic boosting member continuously acts on the battery pack after the battery pack is mounted in place.

12. The backpack blower according to claim 11, wherein the elastic boosting member comprises:
a boosting arm, which is hinged with the battery mounting base through a pin shaft and is adapted to rotate along the pin shaft, wherein the boosting arm comprises a connection end and a boosting lifting end; and
a boosting spring, one end of which is connected to the battery mounting base, and the other end of which is connected to the connection end; wherein
the boosting lifting end is adapted to protrude from the upper bottom surface under an elastic force of the boosting spring acting on the connection end.

13. The backpack blower according to claim 8, wherein the battery mounting base is further provided with a latch assembly;
the latch assembly comprises a locking part and an unlocking part which are symmetrically distributed;
the locking part is adapted to lock the battery pack correspondingly connected to the locking part;
the unlocking part is adapted to unlock the battery pack in a locked state, the unlocking part comprises a first unlocking part and a second unlocking part, and each unlocking part is adapted to be operated independently to unlock a corresponding first battery pack and a corresponding second battery pack separately, and/or
the first unlocking part and the second unlocking part are simultaneously located in a touchable area of a single human hand, and a touching action of a human palm is capable of simultaneously touching the first unlocking part and the second unlocking part, so that locked states of the first battery pack and the second battery pack are synchronously unlocked.

14. A backpack blower, comprising:
a backpack frame;
a blower assembly, which is arranged in the backpack frame, wherein the blower assembly comprises an air inlet cylinder and a duct assembly that are arranged along a transverse axis, and the duct assembly comprises a duct, and a driving motor and a fan that are located in the duct;
a battery pack, which is adapted to provide power to the driving motor, so that the driving motor drives the fan to rotate to generate airflow passing through a main air duct of the blower assembly; wherein
the backpack frame comprises a support member, the support member includes a partition wall extending and protruding inward, and the partition wall partitions an inner side of the support member into a blower assembly mounting part and a battery mounting part:
the blower assembly mounting part is adapted to mount and connect the blower assembly;
and
the battery mounting part is adapted to mount and connect the battery pack; and
a battery mounting base connected to the partition wall, wherein the battery mounting base is provided with an upper bottom surface opposite to the bottom of the battery pack to support and abut against the battery pack; wherein
the upper bottom surface protrudes from the partition wall and has a height difference from the partition wall; and
the battery pack mounted and connected in the battery mounting part is spaced from the partition wall.

15. The backpack blower according to claim 14, wherein one side that is of the battery mounting base and that is adapted to connect and mount the battery pack extends and protrudes outward to form the latch connection part, and the latch connection part is correspondingly provided with an electrical connection terminal; and
the battery pack mounted and connected in the battery mounting part is connected to the latch connection part to dock the electrical connection terminal with a discharge port of the battery pack.

16. The backpack blower according to claim 14, wherein the partition wall is provided with a positioning groove adapted to fit with a shape and a size of the bottom of the battery mounting base, and the battery mounting base is positioned and mounted in the positioning groove, and is fixedly connected to the partition wall through a connector that penetrates through a lug extending and protruding at the bottom of the battery mounting base.

17. The backpack blower according to any one of claims 14 to 16, wherein the upper bottom surface is provided with an elastic boosting member adapted to abut against the battery pack, and an elastic force of the elastic boosting member continuously acts on the battery pack after the battery pack is mounted in place.

18. The backpack blower according to claim 17, wherein the elastic boosting member comprises:
a boosting arm, which is hinged with the battery mounting base through a pin shaft and is adapted to rotate along the pin shaft, wherein the boosting arm comprises a connection end and a boosting lifting end; and
a boosting spring, one end of which is connected to the battery mounting base, and the other end of which is connected to the connection end; wherein the boosting lifting end is adapted to protrude from the upper bottom surface under an elastic force of the boosting spring acting on the connection end.
